# EUROPEAN PATENT SPECIFICATION

(11) **EP 1 316 261 B1**
(45) Date of publication and mention of the grant of the patent: **16.04.2008**
(21) Application number: 02380238.2
(22) Date of filing: 21.11.2002
(51) Int. Cl.: A23P 1/08

(54) **Improved batter and breading machine**
Verbesserte Teig- und Brotkrümel-Überzugsmaschine
Machine améliorée pour l'enrobage dans une pâte et dans une panure

(30) Priority: 28.11.2001 ES 200102890
(43) Date of publication of application: 04.06.2003
(73) Proprietor: INDUSTRIAS GASER, S.L., 17190 Salt (Girona) (ES)
(72) Inventor: Garganta Riubrugent, Narcis, 17190 Salt (Girona) (ES)
(74) Representative: Manresa Val, Manuel

(56) References cited:
- US-A- 3 967 583
- US-A- 4 662 306

## Description

The object of the present invention is referred to an improved batter and breading machine, particularly applicable to batter meat products or other prepared foods, said machine offers remarkable improvements in mechanical and hygienic order, in economy of components and in power consumption in reference to other actual well-known machines and used for the same purpose.

### BACKGROUNDS OF THE INVENTION

Indeed, it is known breading machines that include a bedplate in which two areas are distinguished: a first area that forms a tank which it fills of glue or food agglutinating and where the product in question is introduced in order that it receives a bath and it is impregnated of said food agglutinating, and a second area which upper part shapes a strangulation capable of driving the batter ingredient, such as breadcrumbs, which it goes to the meat product or other prepared.

The first mentioned area has a first endless band, formed with metallic rods, suitable to take and to immerse the meat product or another one in the mentioned tank, as first band ends at a second endless band, with a constitution similar to the first, arranged partially below to the second area and that it leads the product in question, already battered or breaded, towards the exit of the machine.

The first endless band has a configuration, substantially, in "V" appropriated to enter in the own tank container of the agglutinating or similar, while the second band forms a substantially horizontal section towards the exit. Both endless bands are driven by a driven member, with speed variator, through respective power chains.

On the other hand, the same machine has two air blower organs driven by a same motor: an air blower located at the exit of the first band and the other one located on the second band in order to clear, respectively, the excess of battered and agglutinating from the meat product.

In the state of the art it is know US Patent No. 3,967,583, that refers to a machine which includes a liquid-coating or battering unit associated with a dry-coating or breading unit, the units being useful separately or when combined as described. The battering unit includes a batter reservoir in which an open mesh wire belt under tension travels beneath a submerger wheel so as to gently nip the product and drag it below the surface of the batter. In the breading application unit, the loose breading material is stored in a hopper above which is a flat slider plate over which passes an open mesh wire conveyor belt in its product-advancing run. This belt then passes downwardly after discharging the coated product, to a lower point in the hopper where the belt is inclined upwardly toward the opposite end of the unit at the inlet end of the slider plate. This portion of the conveyor belt is the breading material elevating run and it travels close to an inclined bottom wall of the hopper. During the latter part of this run, the conveyor passes through a slot of limited dimensions which causes the conveyor belt to pump the breading material upwardly toward the product-advancing run where the dry material is pumped up from the elevating run to the product-advancing run through the wire mesh of the belt. In three embodiments a V-shape splitter then splits the upper portion of the breading material flow while providing a bed of this material of predetermined thickness on a central product path while diverting parts of the breading material flow laterally to both sides of the central path portion. The liquid-coated food product is placed on the central path portion downstream from the splitter and, as the product advances along the run above the flat slider plate two side plows, one each side of the product path, converge the breading material on each side of the path toward the center over the traveling product. In a first embodiment, the battering unit is placed directly above the breading unit with reverse flow in the two units. In a second and third embodiment, the battering unit is placed ahead of, and generally nearly in horizontal alignment with the product-advancing run of the breading application unit.

Preferably, a tamper plate is provided to bear down on the breading material above the product to flatten out the breading material on top of and around the food product. A take-away conveyor may be used for discharging the coated product outside of the machine, in the first and second embodiments, while the third embodiment does not require this conveyor. In comparison to the present application, in this US patent the endless bands are driven by means of a gear system (11, 12, 13), and other feature is a cross-sectional bridge with a plurality of rods located on the upper area of the second endless band. Moreover all endless bands are driven by a driven member, through respective power chains, and on the other hand, in the breading application unit of this US patent, the loose breading material is stored in a hopper above which is a flat slider plate over which passes an open mesh wire conveyor belt in its product-advancing run.

The machines of the previously described have several disadvantages. In the first place, the fact that the mentioned endless bands are driven by chains means a complication for their detachment of such chains, and therefore, a difficulty for the periodic disassembling of the same ones in order to carry out a good cleaning of these bands, such operation is compulsory in this type of components that continuously are in contact with food products whose rests are susceptible to ferment if the due and precise cleaning is not observed.

There is a situation it has to be added to the previous disadvantage, the fact that the second endless band, in particular, is fitted on an only chassis, the one of the machine, which also makes difficult its periodic disassembling.

Another aspect that represents an increase of the price of the machine, is the fact to need two air blower organs to clear the excesses of battered and agglutinating and from the treated product. It supposes, also, a certain power consumption.

All the mentioned disadvantages are solved in the present batter and breading machine.

Indeed, the batter and breading machine, object of the present invention presents, on the one hand, the advantage that the second endless band is fitted on a double chassis, which it makes easier the cleaning of the same one. Also the mentioned endless bands are driven by means of a gear system from which it is very easy to detach them in order to disassemble the corresponding band and to proceed to their cleaning precisely and periodically.

The same second endless band, instead of being invariably horizontal like in other known machines, is capable of experiencing certain variations of layout in the exit zone of the machine, which it gives a certain versatility in the form to unload the treated meat product.

Another advantage of the present machine, referred to the economy of costs and electrical consumption, is in the fact that the second air blower organ has been replaced by a curtain of rods that removes the leftover battered of the treated product. This, as well as it contributes the same effectiveness that in the previous machines, supposes the saving of mentioned the second air blower, which allows that the motor that drove both air blower can be of reduced power and, therefore, of smaller consumption.

These and other advantages will be appreciated better in the detailed description that it follows.

### BRIEF DESCRIPTION OF THE DRAWINGS

And in order to facilitate the comprehension of this description, five sheets of drawings are enclosed, only as illustrative and non limitative example, in which:
Figure 1 represents a general view, and in perspective, of the present machine.
Figure 2 illustrates, also in perspective, an extended detail of the connection through gear means to drive the two endless bands, with one of them separated to the machine.
Figure 3 is another perspective view that belongs to second endless band fully out of the machine.
Figure 4 illustrates a view of a tensor device of the first endless band.

And the figures 5a, 5b, 5c correspond to other diagrams that give an scheme of several settings of the circuit of the second endless band.

### CONCRETE EMBODIMENT

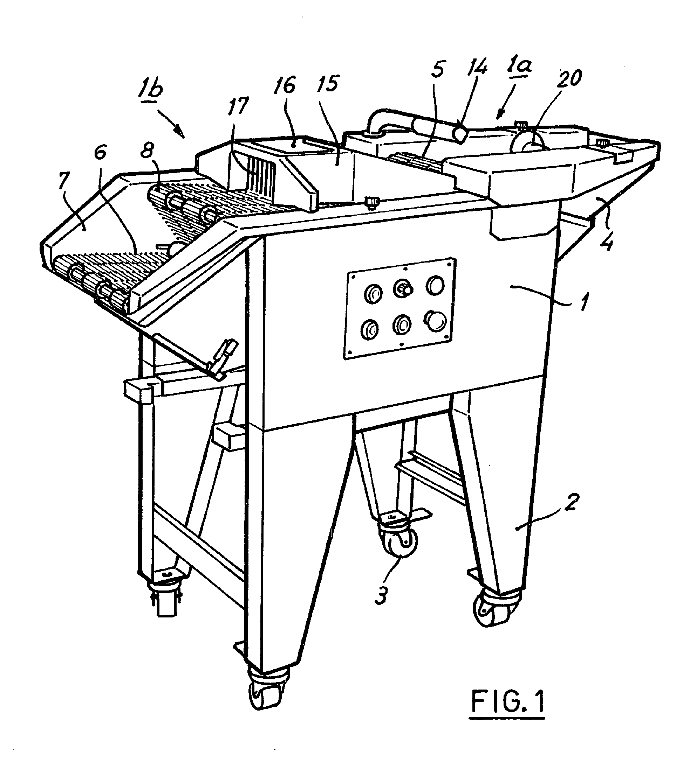

According to such figures, the improved batter and breading machine object of the present invention (fig.1) basically comprises a body of bedplate 1 with legs 2 equipped with wheels 3 for its possible movement, being possible to distinguish in the same bedplate a rear area of glueing 1a and a front area of battered 1b.

In the area 1a or rear part of the machine, from where the meat or food product is introduced to be treated, there is a tank 4 that it is filled, like it is well-known, of glue or food agglutinating; and in that same tank 4 is housed a first endless band 5 that forms a general layout in "V" in order to enter the mentioned product in the same tank 4.

In the area 1b or front half of the machine there is a second endless band 6 that is fitted in an own chassis 7 that, as well, it is included in the chassis of bedplate 1 of the machine.

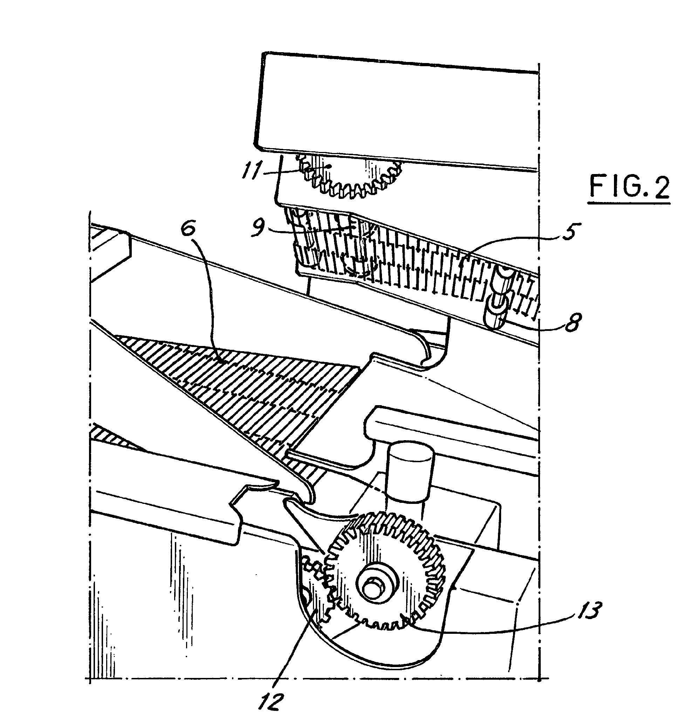

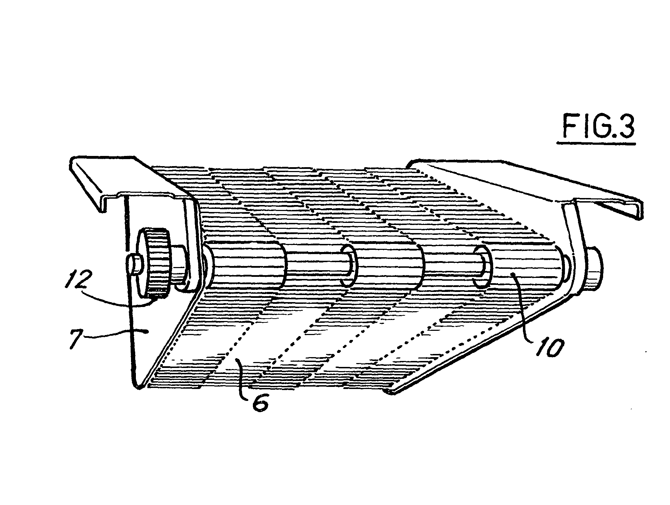

Both endless bands 5, 6 are made of meshy constitution, like it is well-known, and are equipped with a plurality of support rolls 8, one of which 9, 10 respectively, is laterally finished by a corresponding lateral pinion 11, 12 (figs.2 and 3) that gears with a gear wheel 13 that, as well, receives the drive of the corresponding motor with speed variator (non visible, but of conventional type). This, doubtlessly confers to referred 5, 6 bands a remarkable ease to remove them from mentioned wheel 13 and to separate them from the machine in order to proceed to its cleaning, as it is illustrated in the same fig.2 where it appears the first endless band 5 totally separated, and in fig.3 that it shows the second band 6 separated too along with its own chassis 7.

Returning to the fig.1, and like it is well known, at the exit of the first endless band 5 there is an air blower tube 14 driven by a corresponding ventilator (not visible but like it is well known) whose air impulsion clears the excess of agglutinating that it is deposited over the product to be treated, while in the halfway area of the upper part of the machine, at the beginning of the second band 6, there is something similar to a "bridge" 15 whose upper part 16 is opened in order to be able to throw, through itself, the batterer or breader ingredient, as breadcrumbs, with the distinguishing feature that from the front part, or exit of this "bridge" 15, series of rods 17 are hanging, forming a curtain appropriate to touch with the product already battered (not illustrated) and to clear it the excess of battered or breading. This saves to install a second tube or air blower element, as well as to envisage a more powerful ventilator and a greater consumption.

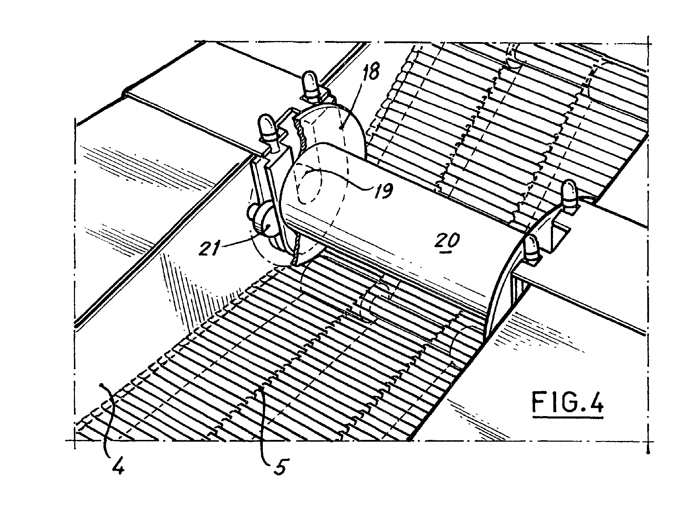

On the other hand (fig.4) in order to maintain the mentioned configuration in "V" and its due tension of the first band 5, a pair of tensor elements has been envisaged in the present machine, one in each end of the edge of the dihedral angle that it forms the same band 5, constituted each one by a piece in "U" 18, as a horseshoe, in which piece is supported the respective trunnion 19 of a cross - sectional runner 20 to the same endless band 5, at the same time that the curved lower portion of each mentioned element 18 presses on the repeated band 5. And in order to regulate said pressure, the outer lateral rims of said tensor 18 are grooved and are capable of running by a corresponding wheel 21 installed in the respective lateral of that tank 4. Therefore, going up or down the same tensor in "U" 18 the tension granted to the band 5 is regulated.

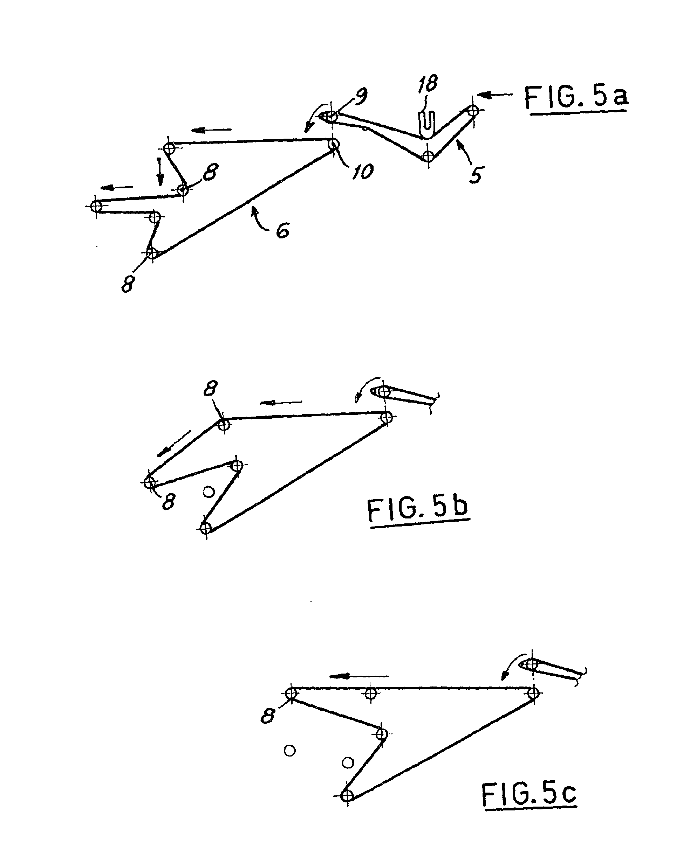

Finally, and returning again to the fig.1, it is possible to appreciate that the second endless band 6 is capable of adopting, in its front portion, several curves in order to influence the exit of the treated product, as it is outlined in the figs. 5a, 5b, and 5c, all this taking advantage of one turning points and putting out of action another turning points of the rolls 8 that go with the circuit of the same band 6. Therefore, the fig. 5a outlines an exit example of the treated product in which this one, after running by a first section, substantially horizontal, falls to a second section of a lower level and equally horizontal, in order to cause in said falling an overturn of the mentioned product; in the fig.5b, however, the product runs by a first horizontal section and later it runs to a second inclined and remarkably descendent section. Finally, in accordance to the fig. 5c said treated product leaves by a continuously horizontal section, all of them in accordance to the unloading necessities and the type of receiving organ of the same product (that it is not illustrated because it can be any of well known type and because, in addition, it is not an object of this invention).

It has been described widely the nature of the invention as well as its intrinsic advantages, it is pointed out that the present batter and breading machine could be constructed in the most suitable form, in the most appropriate size and with the most convenient materials and more convenient means, being all within the scope of the following claims.

## Claims

1. Batter and breading machine, applicable to the treatment of meat products and other food products, of the type that consists in a bedplate (1) in whose upper part two areas are distinguished (1a and 1b), the first of them (1a) defining a tank (4) that can be filled with a food agglutinating, while at the beginning of the second area (1b) there is a strangling with the intention to throw the battered or breaded ingredient of the product to be treated, which areas are each provided with endless bands (5 and 6), driven by a plurality of rolls, to submerge the product to treat in that tank (4) and in order to take the same product with agglutinating under the mentioned breaded strangling respectively, which endless bands (5, 6) are driven by a motor with speed variator and each have over them organs that they remove, respectively, the excess of breaded and battered agglutinating, said second endless band (6) is fitted on an own chassis (7) that, at the same time, is included in the chassis of the bedplate (1) **characterized in that** it comprises:
- in addition to the mentioned plurality of rolls, each endless band (5, 6) is supported and driven by respective rolls (9, 10) finished off in an end by a corresponding lateral pinion (11, 12) that gears with the driven member with speed variator through at least one gear (13), and
- said strangling includes something similar to a cross - sectional bridge (15) which upper part (16) is opened in order to be able to throw, through itself, the battered and breaded ingredient, and that from the front part, or exit of said bridge (15), hangs a series of rods (17) that constitute an appropriate curtain to brush with the already battered product and remove it the battered excess.

2. Machine in accordance to the claim 1 **characterized in that** it includes an adjustable tensor means (18) to provide an adjustable tension to the mentioned first endless band (5).

3. Machine in accordance to the claim 2, **characterized in that** the mentioned tensor means consist in a pair of pieces (18) in "U" like horseshoes, each one to each lateral side of the tank (4), inside of said pieces (18) is supported the respective trunnion (19) of a cross - sectional runner (20) to the same endless band (5), at the same time that the curve lower portion of each mentioned element (18) presses on the repeated band (5), being grooved the outer rims of said pieces (18) and being susceptible to run vertically by a corresponding wheel (21) installed in the respective lateral of that tank (4).

4. Machine in accordance to at least one of the previous claims **characterized in that** the rolls (8) that guide the front portion of the mentioned endless band (6) are capable of fixing in several pivoting points of the own chassis (7) giving several curves, as it is convenient, to said front portion of the band (6) for the exit of the treated product.

## Patentansprüche

1. Teigbeschichtungs- und Paniermaschine, die auf die Behandlung von Fleischprodukten und anderen Lebensmittelprodukten anwendbar ist, bestehend aus einer Auflageplatte (1), in deren oberem Teil zwei Bereiche unterschieden sind (1a und 1b), wobei der erste (1a) einen Behälter (4) definiert, der mit einem Lebensmittelkleber gefüllt werden kann, während sich am Beginn des zweiten Bereichs (1 b) eine Verengung befindet, durch die der Teigbeschichtungs- oder Panierstoff des zu behandelnden Produkts geschleudert werden soll, wobei die Bereiche jeweils mit Endlosbändern (5 und 6) versehen sind, die von mehreren Rollen angetrieben werden, wodurch das zu behandelnde Produkt in den Tank (4) eingetaucht wird und dasselbe mit dem Kleber bestrichene Produkt unter die genannte panierende Verengung gebracht wird, wobei die Endlosbänder (5, 6) durch einen Motor mit Variator angetrieben werden und jeweils darüber befindliche Organe zur Entfernung des überschüssigen am Produkt klebenden Panier- und Teigbeschichtungsstoffs aufweisen, wobei das zweite endlose Band (6) an einem eigenen Rahmen (7) befestigt ist, der gleichzeitig zum Rahmen der Auflageplatte (1) gehört, **dadurch gekennzeichnet, dass** sie folgendes umfasst:
- außer den genannten mehreren Rollen lagert jedes endlose Band (5, 6) auf entsprechenden Rollen (9, 10) und wird von diesen angetrieben, wobei diese an einem Ende von einem entsprechenden seitlichen Ritzel (11, 12) abgeschlossen sind, das mit dem angetriebenen Element mit Variator über mindestens eine Verzahnung (13) verzahnt ist, und
- die Verengung weist etwas auf, das einer Querschnittsbrücke (15) ähnelt, deren oberer Teil (16) geöffnet ist, damit durch diesen hindurch der Teigbeschichtungs- und Panierstoff geschleudert werden kann, und dass am vorderen Teil bzw. am Ausgang der Brücke (15) eine Reihe von Stangen (17) hängen, die einen geeigneten Vorhang darstellen, mit dem das bereits mit Teig beschichtete Produkt abgestrichen und davon der überschüssige Teig entfernt wird.

2. Maschine nach Anspruch 1, **dadurch gekennzeichnet, dass** sie ein einstellbares Spannmittel (18) aufweist, mit dem das genannte erste Endlosband (5) mit einer einstellbaren Spannung versehen werden kann.

3. Maschine nach Anspruch 2, **dadurch gekennzeichnet, dass** das genannte Spannmittel aus einem Paar U-förmiger Stücke (18) wie ein Huf besteht, jeweils eines auf jeder Seite des Behälters (4), wobei innerhalb der Stücke (18) der zugehörige Zapfen (19) einer Querschnittslaufschiene (20) für dasselbe Endlosband (5) gelagert ist und gleichzeitig der untere Kurventeil jedes genannten Elements (18) auf das wiederholte Band (5) drückt, wobei die Außenränder der Stücke (18) Rillen aufweisen und mittels eines in die entsprechende Seite des Behälters (4) eingebauten entsprechenden Rads (21) vertikal laufen können.

4. Maschine nach mindestens einem der vorhergehenden Ansprüche, **dadurch gekennzeichnet, dass** die den vorderen Teil des genannten Endlosbandes (6) führenden Rollen (8) an mehreren Drehpunkten ihres eigenen Rahmens (7) befestigt werden können, wodurch sich je nach Zweckmäßigkeit verschiedene Kurven bezüglich des vorderen Teils des Bandes (6) zum Austrag des behandelten Produkts ergeben.

## Revendications

1. Machine à enrober de pâte à frire et à enduire de chapelure, pouvant être appliquée au traitement de produits carnés et autres produits alimentaires, du type qui consiste en une presse (1) dont la partie supérieure comprend deux zones différentes (1a et 1b), la première d'entre elles (1a) définissant un réservoir (4) qui peut être rempli d'un liant pour aliment, et la deuxième zone (1 b) ayant à son début un étranglement servant à faire passer les ingrédients de pâte à frire ou de chapelure du produit à traiter, et dont les zones sont équipées chacune de bandes sans fin (5 et 6), actionnées par une série de rouleaux, pour plonger le produit à traiter dans ledit réservoir (4) et pour faire passer ledit produit recouvert de liant par ledit étranglement enduit de chapelure respectivement, dont les bandes sans fin (5, 6) sont actionnées par un moteur à vitesse variable et dont chacune est équipée d'éléments permettant de retirer le surplus de pâte à frire et de chapelure respectivement, ladite seconde bande sans fin (6) étant fixée à son propre châssis (7) lequel est à la fois inclus dans le châssis de la presse (1), et **caractérisée en ce qu'**elle comprend :
- en plus de ladite série de rouleaux, chaque bande sans fin (5, 6) est supportée et actionnée par des rouleaux respectifs (9, 10) terminés à un bout par un pignon latéral correspondant (11, 12) qui est entraîné par l'élément d'actionnement à vitesse variable par au moins un engrenage (13), et
- ledit étranglement comprend un élément similaire à un pont transversal (15) dont la partie supérieure (16) est ouverte afin d'y permettre le lancement de l'ingrédient enrobé de pâte à frire et enduit de chapelure, et de la partie avant, ou sortie dudit pont (15) pend une série de baguettes (17) pour former un rideau permettant de brosser le produit déjà enrobé de pâte à frire et d'en retirer le surplus de pâte à frire.

2. Machine conforme à la revendication 1 et **caractérisée en ce qu'**elle inclut un dispositif tendeur réglable (18) afin de permettre le réglage de la tension de la première bande sans fin (5).

3. Machine conforme à la revendication 2 et **caractérisée en ce que** ledit tendeur consiste au moins en deux pièces (18) en forme de fer à cheval, chacune située de chaque côté du réservoir (4), et qu'à l'intérieur desdites pièces (18) se trouve le pivot respectif (19) d'un galet transversal (20) sur la même bande sans fin (5), alors que la partie inférieure courbe de chacun desdits éléments (18) exerce une pression sur cette bande (5), les bords externes desdites pièces (18) étant rainurées et susceptibles de tourner verticalement au moyen de la roue correspondante (21) montée du côté respectif dudit réservoir (4).

4. Machine conforme à au moins l'une des revendications ci-dessus et **caractérisée en ce que** les rouleaux (8) qui guident la partie avant de ladite bande sans fin (6) peuvent être fixés à plusieurs points pivotant du châssis lui-même (7) formant plusieurs lignes courbes, selon les besoins, sur ladite partie avant de la bande (6) pour permettre la sortie du produit traité.
